# EUROPÄISCHE PATENTSCHRIFT

(11) **EP 2 422 679 B1**
(45) Veröffentlichungstag und Bekanntmachung des Hinweises auf die Patenterteilung: **06.10.2021**
(21) Anmeldenummer: 11177086.3
(22) Anmeldetag: 10.08.2011
(51) Int. Cl.: A47L 15/42

(54) **Geschirrspülmaschine**
Dishwasher
Lave-vaisselle

(30) Priorität: 23.08.2010 DE 102010039656
(43) Veröffentlichungstag der Anmeldung: 29.02.2012
(73) Patentinhaber: BSH Hausgeräte GmbH, 81739 München (DE)
(72) Erfinder: Gram, Markus, 86156 Augsburg (DE); Heisele, Bernd, 89567 Sontheim (DE)

(56) Entgegenhaltungen:
- DE-A1-102004 047 994
- DE-A1-102007 025 263
- DE-B3-102007 048 556
- DE-U- 1 914 744
- DE-U1- 20 319 711
- US-A- 5 199 455

## Beschreibung

Die Erfindung betrifft eine Geschirrspülmaschine, insbesondere eine Haushalt-Geschirrspülmaschine mit einer Laugenpumpe zum Abpumpen von Spülflüssigkeit aus einem Spülbehälter, einer druckseitig an die Laugenpumpe angeschlossenen Ablaufleitung, einem mit der Ablaufleitung verbundenen Belüftungskanal, über den in Belüftungsrichtung Luft in die Ablaufleitung einströmen kann, und einem im Belüftungskanal angeordneten, mit einem den Belüftungskanal in einer Schließstellung verschließenden und in einer Öffnungsstellung freigebenden Dichtelement.

Eine Geschirrspülmaschine umfasst üblicherweise einen Spülbehälter zur Aufnahme von Spülgut und eine Laugenpumpe zum Abpumpen von nicht mehr benötigter Spülflüssigkeit aus dem Spülbehälter. Die Laugenpumpe fördert die Spülflüssigkeit in eine Ablaufleitung, die z.B. mit dem hausseitigen Abwassersystem verbindbar ist. Um zu verhindern, dass sich aufgrund eines hydrostatischen Druckunterschiedes ein Saugheber in der Ablaufleitung bildet und dadurch der Spülbehälter, beispielsweise im Falle eines gewünschten Teilabpumpens von Spülflüssigkeit, vollständig entleert wird, ist üblicherweise ein Belüftungskanal vorhanden, der einerseits mit der Atmosphäre und andererseits mit der Ablaufleitung verbunden ist. Auf diese Weise wird die Ablaufleitung belüftet, d.h. über den Belüftungskanal kann Luft aus der Atmosphäre in den Ablaufkanal strömen. Die Bildung eines Saughebers ist dadurch unterbunden. Im Fall, dass der Belüftungskanal eine Verbindung zum Innenraum des Spülbehälters hat, wird während des Abpumpens zweckmäßigerweise der Belüftungskanal verschlossen, da sonst Spülflüssigkeit entgegen der Belüftungsrichtung, also der Strömungsrichtung der Luft bei der Belüftung, in den Spülbehälter bzw. in dessen Innenraum zurück gepumpt würde.

Bei einer z.B. aus der WO 2007/074104 A1 bekannten Geschirrspülmaschine ist in der Belüftungsleitung ein Sperrventil angeordnet, das ein von einem Schwimmer getragenes, in einer Schließstellung den Belüftungskanal verschließendes und in einer Öffnungsstellung diesen freigebendes Dichtelement aufweist. In der Ruhestellung, also jener Stellung, die das Ventil ohne äußere Beeinflussung selbsttätig einnimmt, befindet sich der Schwimmer in einer unteren Position, wobei sich das Dichtelement in der

Öffnungsstellung befindet, d.h. den Belüftungskanal bzw. eine mit diesem fluidisch verbundene Belüftungsöffnung des Ventils freigibt. Während des Abpumpens von Spülflüssigkeit aus dem Spülbehälter dringt Spülflüssigkeit in den Belüftungskanal ein, wodurch der Schwimmer angehoben wird, bis sich das Dichtelement sich schließlich in der Schließstellung befindet, in der es den Belüftungskanal bzw. die erwähnte Belüftungsöffnung verschließt. Ein Austritt von Spülflüssigkeit über den Belüftungskanal ist dadurch verhindert.

Die DE 10 2007 025 263 A1 beschreibt eine Geschirrspülmaschine mit einer Ablaufpumpe, die an einen Ablauf angeschlossen ist. Der Ablauf kann mit Hilfe eines Rückschlagventils belüftet werden.

Die DE 10 2004 047 994 A1 beschreibt ein Rohrbelüftungsventil zum Belüften einer Abflussleitung in einem wasserführenden Haushaltsgerät. Das Rohrbelüftungsventil umfasst einen schwimmenden Ventilkörper.

Aufgabe der Erfindung ist es, eine Geschirrspülmaschine, insbesondere eine Haushalt-Geschirrspülmaschine, mit einem alternativ ausgestalteten Sperrventil vorzuschlagen.

Diese Aufgabe wird bei einer Geschirrspülmaschine der eingangs genannten Art dadurch gelöst, dass ein in die Schließstellung rückstellendes Sperrventil eingesetzt wird. Das Sperrventil ist als Sitzventil ausgebildet, dessen Dichtelement von einer entgegen der Belüftungsrichtung wirkenden Kraft in der Schließstellung gehalten ist wobei das Dichtelement durch sein Eigengewicht in der Schließstellung gehalten ist und wobei eine Belüftungsöffnung des Sperrventils und das Dichtelement in einem Ventilraum angeordnet sind, der oberhalb der Belüftungsöffnung mit dem Belüftungskanal und unterhalb der Belüftungsöffnung mit der Atmosphäre fluidisch verbunden ist. Bei einem solchen Ventil kehrt das Dichtelement selbsttätig von der Öffnungsstellung, in der eine Belüftung der Ablaufleitung gewährleistet ist, stets in die Schließstellung zurück. In der Ruhestellung ist das vorgeschlagene Sperrventil geschlossen, so dass während des Abpumpens wegen des zwischen dem geschlossenen Sperrventil und der Ablaufleitung vorhandenen Luftpolsters Spülflüssigkeit nicht bis zum Sperrventil vordringen kann. Es besteht somit keine Gefahr, dass das Sperrventil durch eingedrungene Spülflüssigkeit verunreinigt und dadurch dauerhaft verschlossen wird, somit seine Funktionsfähigkeit teilweise oder gar vollständig verliert, indem es zu einem dauerhaften Verschluss des Belüftungskanals kommt. Ein Sperrventil der vorgeschlagenen Art gewährleistet somit einen zuverlässigen, störungsfreien Betrieb. Das

Sitzventil ist aufgrund seines einfachen Aufbaus mit wenig Aufwand und daher kostengünstig herstellbar. Das Dichtelement wirkt dabei mit dem als Ventilsitz dienenden Randbereich einer Belüftungsöffnung zusammen. Zur Rückstellung in die Schließstellung ist es von einer. entgegen der Belüftungsrichtung wirkenden Kraft in Schließrichtung beaufschlagt. Dabei lässt sich das Öffnungsverhalten des Ventils auf einfache Weise insbesondere durch die Größe der Kraft bestimmen. Je geringer diese Kraft ist, desto geringer ist der in dem sich von Sperrventil zur Ablaufleitung erstreckenden Teil des Belüftungskanals vorhandene Unterdruck, der erforderlich ist, damit die auf das Dichtelement in Belüftungsrichtung wirkende Druckkraft die Rückstellkraft übersteigt und das Dichtelement den Belüftungskanal freigibt.

Für die Ausgestaltung des Sperrventils ist ein Dichtelement vorgesehen, das durch sein Eigengewicht, also durch Gewichtskraft in der Schließstellung gehalten ist. Ein solches Ventil lässt sich auf technisch einfachste Weise kostengünstig realisieren. So kann das Dichtelement scheiben- oder plattenförmig ausgebildet sein und beispielsweise als leicht herzustellendes Kunststoff-Spritzteil ausgestaltet sein. Ein solches Ventil ist derart ausgebildet, dass die Belüftungsöffnung und das Dichtelement in einem Ventilraum angeordnet sind, der oberhalb der Belüftungsöffnung mit dem Belüftungskanal und unterhalb der Belüftungsöffnung mit der Atmosphäre fluidisch verbunden ist.

Bei einer zweiten Ausführungsvariante, die nicht Teil der Erfindung ist, wird das Dichtelement mit Hilfe eines Federelements, beispielsweise einer Schraubendruckfeder, in der Schließstellung gehalten. Bei einer dritten bevorzugten Ausführungsvariante weist das Dichtelement einen elastischen Bereich auf, der aufgrund elastischer Rückstellkräfte die Entlüftungsöffnung verschließt. Ein derartiges Dichtelement kann z.B. ein Plättchen mit einem elastischen Randbereich sein, das mit einem zentralen Fixierbereich an einer die Belüftungsöffnung tragenden Querwand des Ventils gehalten ist.

Bei einem Ventil, dessen Dichtelement durch Eigengewicht in der Schließstellung gehalten ist, ist es denkbar, dass das Dichtelement bei einer Schräglage der Geschirrspülmaschine, etwa beim Transport, von der Belüftungsöffnung abgehoben wird und diese freigibt. Ein Auslaufen von Flüssigkeit über das Sperrventil wird jedoch bei einer weiteren bevorzugten Ausführungsvariante dadurch verhindert oder zumindest verringert, dass zwischen dem Entlüftungsventil und dem Ablaufkanal eine Flüssigkeitsfalle im Verbindungskanal angeordnet ist. Eine solche Ausgestaltung kann auch bei einem der anderen oben beschriebenen Sperrventilvarianten zweckmäßig sein, um ebenfalls sicherzustellen, dass etwa während des Transports und beispielsweise für den Fall, dass das Dichtelement nicht mehr zuverlässig schließt, Spülflüssigkeit zurück in den Innenraum des Spülbehälters fließt.

Die Erfindung und ihre vorteilhaften Aus- und Weiterbildungen sowie deren Vorteile werden nachfolgend anhand von Zeichnungen näher erläutert.

Es zeigen jeweils schematisch:
- FIG. 1: eine Haushalt-Geschirrspülmaschine in schematischer Schnittdarstellung, deren Ablaufleitung mit einem ein Sperrventil enthaltenden Belüftungskanal versehen ist,
- FIG. 2: ein erstes Ausführungsbeispiel eines Sperrventils, bei dem das Dichtelement aufgrund seines Eigengewichtes in seiner Schließstellung gehalten wird,
- FIG. 3: ein zweites Ausführungsbeispiel eines Sperrventils, das nicht Teil der Erfindung ist, bei welchem das Dichtelement mit Hilfe eines Federelements in seiner Schließstellung gehalten wird,
- FIG. 4: ein drittes Ausführungsbeispiel eines Sperrventils, das nicht Teil der Erfindung ist, das ein durch Eigenelastizität die Belüftungsöffnung des Sperrventils verschließendes Dichtelement aufweist,
- Fig. 5: den Ausschnitt V in Fig. 1, und
- Fig. 6: eine dem Ausschnitt V entsprechende Abbildung, die eine Haushalt-Geschirrspülmaschine mit einer Flüssigkeitsfalle zeigt.

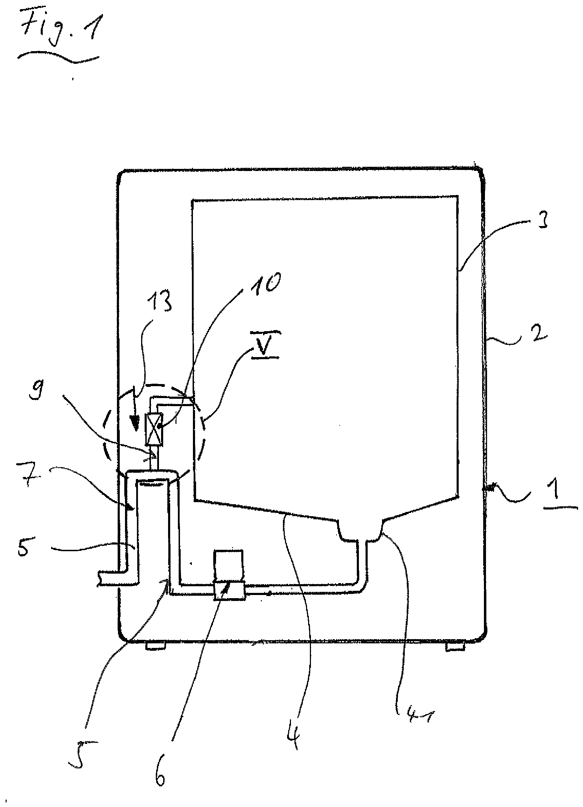

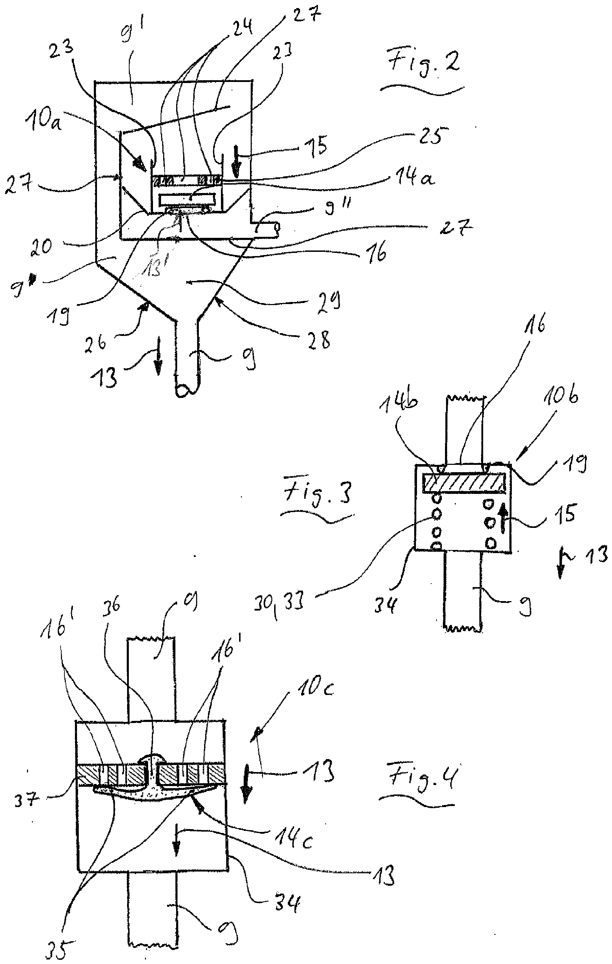

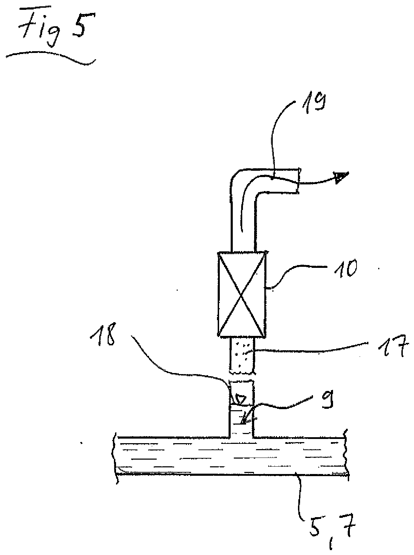

Eine Geschirrspülmaschine, insbesondere eine Haushalt-Geschirrspülmaschine 1 weist ein Gehäuse 2, einen darin angeordneten Spülbehälter 3, eine mit dem Boden 4 des Spülbehälters 3 verbundene Ablaufleitung 5 und eine Laugenpumpe 6 auf. Hier im Ausführungsbeispiel von Figur 1 führt vom Flüssigkeitssammelbereich 41, insbesondere einem Pumpentopf, der an der tiefsten Stelle des Bodens 4 vorgesehen ist, ein eingangsseitiger Abschnitt der Ablaufleitung 5 zur Laugenpumpe 6. Das Ende des ausgangsseitigen Abschnitts der Ablaufleitung 5 ist einem hausseitigen Abwasserschlauch (nicht gezeigt) verbindbar. In der Ablaufleitung 5 ist in Strömungsrichtung bzw. Abpumprichtung betrachtet hinter der Laugenpumpe eine sich nach oben erstreckende Leitungsschleife 7 vorhanden. Diese ist insbesondere in Form eines auf den Kopf gestellten U's , d.h. als umgedrehtes Siphon ausgebildet. Aufgrund hydrostatischer Druckunterschiede kann sich in der Ablaufleitung 5 ein Saugheber ausbilden. Dies kann zum ungewollten Leerlaufen des Spülbehälters 3, etwa bei einem Teilabpumpen von Spülflüssigkeit während eines Teilprogrammschrittes führen, obwohl eine bestimmte Mindest-Spülbadmenge im Spülbehälter zur Durchführung des jeweiligen Teilspülgangs des gewählten Geschirrspülprogramms gefordert ist. Um dies zu verhindern, ist an einer oberen, vorzugsweise an der höchsten Stelle der Leitungsschleife 7 ein Belüftungskanal 9 mit seinem einen, hier unteren, Ende angeschlossen. Das andere, hier obere, Ende mündet in die Atmosphäre, beispielsweise wie hier im Ausführungsbeispiel in den Innenraum des mit der Atmosphäre in Verbindung stehenden Spülbehälters 3.Im Belüftungskanal 9 ist ein in die Schließstellung rückstellendes Sperrventil 10 angeordnet, ein Ventil also, das in der Ruhestellung, also bei Abwesenheit einer äußeren Beeinflussung, beispielsweise ein durch das Ventil durchströmenden Mediums, geschlossen ist. Das Sperrventil 10 erlaubt eine Belüftung- bzw. einen Zustrom von Luft aus der Atmosphäre in Belüftungsrichtung 13, also zum Ablaufkanal 5 bzw. zur Leitungsschleife 7 hin. Ein Fluidstrom in die Gegenrichtung ist dagegen verhindert. Das Sperrventil 10 wirkt somit im Prinzip wie ein Rückschlagventil. Es weist ein Dichtelement 14 auf, welches zwischen einer Öffnungsstellung und einer Schließstellung beweglich ist, wobei es von einer entgegen der Belüftungsrichtung 13 wirkenden Kraft 15 in der Schließstellung, in der es eine mit dem Belüftungskanal fluidisch verbundene Belüftungsöffnung 16 des Sperrventils 10 verschließt, gehalten ist. Wenn aufgrund eines entsprechenden hydrostatischen Drucks in der Ablaufleitung 5 bzw. in der Leitungsschleife 7 Spülflüssigkeit in den Belüftungskanal 9 eindringt, baut sich zwischen der Ablaufleitung 5 und dem geschlossenen Sperrventil 10 ein Luftpolster 17 auf, welches allenfalls ein teilweises Eindringen von Flüssigkeit in den Belüftungskanal 9, etwa bis zu dem in FIG. 5 exemplarisch gezeigten Niveau 18, erlaubt. Eine Verschmutzung des Sperrventils 10 oder ein Ausfließen von Spülflüssigkeit über den Belüftungskanal 9, wie diese in FIG. 4 durch den Pfeil 19 angedeutet ist, ist dadurch verhindert.

FIG. 2 zeigt exemplarisch ein Sperrventil 10a, bei welchem das Dichtelement 14a aufgrund seines Eigengewichts auf die Belüftungsöffnung 16 bzw. einen diese ringförmig umgebenden Ventilsitz 19 gedrückt wird. Die oben erwähnte Kraft 15 ist in diesem Falle die durch die Masse des Dichtelements hervorgerufene Gewichtskraft. Durch entsprechende Wahl des Materials und der Masse des Dichtelements 14a lässt sich das Schließ- bzw. Öffnungsverhalten des Sperrventils 10a in weiten Bereichen insbesondere so wählen, dass bereits ein geringer Unterdruck in dem sich zwischen der Ablaufleitung 5 und dem Sperrventil 10a erstreckenden Abschnitt des Belüftungskanals 9 ausreicht, dass das Dichtelement 14a die Belüftungsöffnung 16 freigibt. Die Belüftungsöffnung 16 ist in einer Querwand 20 des Sperrventils 10a vorhanden. Von dieser stehen beispielsweise wandförmig ausgebildete Halteelemente 23 zur lateralen Fixierung des Dichtelements 14a vor. Die im Einbauzustand gemäß FIG. 2 vertikal verlaufende Bewegungsbahn des Dichtelements 14a ist durch einen mit Vertikalabstand zur Belüftungsöffnung 16 angeordneten, von Öffnungen 24 durchsetzten Anschlag 25 begrenzt. Das Sperrventil 10a des Ausführungsbeispiels nach FIG. 2 ist innerhalb eines geschlossenen Gehäuses 26 angeordnet, in welches unterseitig der Belüftungskanal 9 einmündet. Innerhalb des Gehäuses 26 ist mit Hilfe von Wandelementen 27 ein Kanalabschnitt 9' gebildet, der den Belüftungskanal 9 fortsetzt und der oberseitig, d.h. auf der dem Dichtelement 14a abgewandten Seite des Anschlags 25 in das Sperrventil 10 mündet. Der ursprünglich von unten nach oben führende Belüftungskanal 9 erfährt somit eine schleifenförmige Umlenkung derart, dass im Bereich der Belüftungsöffnung 16 die Belüftungsrichtung 13' von unten nach oben verläuft. Der Kanalabschnitt 9'führt dabei bis in den Bereich des höchsten Punktes des Gehäuses 26. Er stellt somit eine Art Labyrinth bereit, das für eine im Belüftungskanal 9 hochsteigende bzw. hochlaufende Flüssigkeit bis zum Erreichen eines Maximalpegels bzw. einer maximalen Flüssigkeitssäule behindert oder verhindert, dass die hochsteigende Flüssigkeit in das Sperrventil 10a hineinlaufen kann. Unterhalb der Querwand 20 bzw. unterhalb der Belüftungsöffnung 16 mündet ein Kanalabschnitt 9"als einlassseitige Fortsetzung des Belüftungskanals 9 aus dem Gehäuse 26 aus und ist, wie in FIG. 1 gezeigt, mit der Atmosphäre wie z.B. hier mit dem Innenraum des Spülbehälters 3 verbunden. Zur Belüftung des Ablaufleitung 5 strömt Luft über den einlassseitigen Kanalabschnitt 9", der fluidisch mit der Atmosphäre, hier dem Innenraum des Spülbehälters, verbunden ist, über das Sperrventil 10a in Strömungsrichtung 13'nach oben und durch den auslassseitigen, schleifenförmigen Kanalabschnitt 9' in den Belüftungskanal 9 in Belüftungsrichtung 13 nach unten zur Ablaufleitung 5, falls diese z.B. durch Unterdruck in Abflussrichtung und somit durch einen Saugheber beaufschlagt wird.

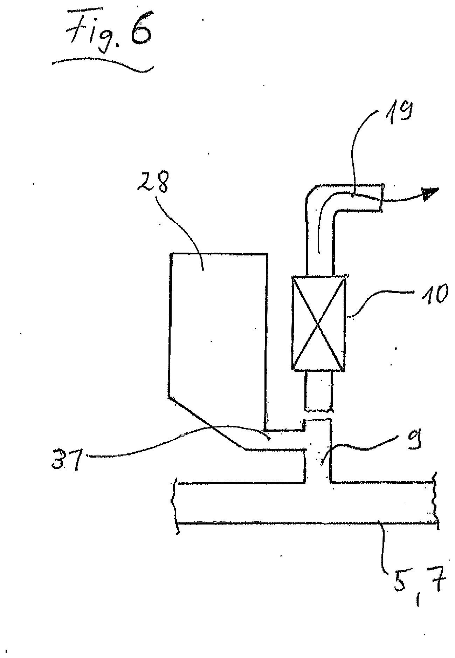

Eine weitere vorteilhafte Ausgestaltung des in FIG. 2 dargestellten Ventils 10a sieht eine Flüssigkeitsfalle 28 vor, die in Form eines vergrößerten, unterhalb des Sperrventils 10a angeordneten Bereichs 29 des Gehäuses 26 ausgebildet ist, an dessen tiefster Stelle der Eingang zum Belüftungskanal 9 liegt und von dem aus sich der auslassseitige Kanalabschnitt 9' nach oben weg erstreckt, der im Belüftungsfall von einer Luftströmung von oben nach unten durchströmt wird Denkbar ist, dass dieser Bereich 29 noch Schikanen in Form von Wandelementen (nicht dargestellt) aufweist, die ein Vordringen von Flüssigkeit zum Sperrventil 10a verhindern oder zumindest behindern. Eine derartige Flüssigkeitsfalle 28 kann auch bei den weiter unten beschriebenen Sperrventilvarianten und ganz allgemein bei beliebig gestalteten Sperrventilen zweckmäßig sein. Die Flüssigkeitsfalle 28 ist dabei, wie in schematisierter Form in Fig. 6 gezeigt ist, etwa über einen Verbindungskanal 31 an einen sich zwischen dem Sperrventil 10 und der Ablaufleitung 5 bzw. der Leitungsschleife 7 erstreckenden Abschnitt des Belüftungskanals 9 angeschlossen. Das Volumen der Flüssigkeitsfalle 28 ist so ausgelegt, dass sie soviel Flüssigkeit aufnehmen kann, dass beispielsweise beim Transport der Geschirrspülmaschine keine Spülflüssigkeit zum Dichtelement 14 des Sperrventils 10 gelangen und dieses verschmutzen kann.

FIG.3 zeigt ein Beispiel eines Sperrventils 10b, bei welchem das Dichtelement 14b mit Hilfe eines Federelements 30, beispielsweise einer Schraubendruckfeder 33 permanent gegen die Belüftungslüftung 16 bzw. gegen einen diese ringförmig umgebenden Ventilsitz 19 gedrückt wird. Das Sperrventil 10b weist ein Gehäuse 34 auf, an das ober- und unterseitig der Belüftungskanal 9, sich hier vertikal erstreckend, angeschlossen ist. Auch bei diesem Ventil ist ein Eindringen von Flüssigkeit in den Belüftungskanal 9 in nennenswertem Ausmaß aufgrund des weiter oben erwähnten Luftpolsters, das sich auch im Falle des Sperrventils 10b aufbaut, verhindert. Das Öffnungsverhalten des Sperrventils 10b lässt sich über die Federkonstante des eingesetzten Federelements 30, d.h. durch

Variierung der das Dichtelement 14b in der Schließstellung haltenden Kraft 15 bestimmen.

FIG. 4 zeigt schließlich ein Beispiel für ein Sperrventil ebenfalls ein Gehäuse 34 aufweisendes Dichtelement 10c, das einen elastischen Bereich 35 aufweist, der aufgrund elastischer Rückstellkräfte die Lüftungsöffnung 16 verschließt. Das Dichtelement 14c ist beispielsweise scheibenförmig ausgebildet und weist einen zentralen Zapfen 36 auf, der eine Öffnung einer im Gehäuse 34 des Sperrventils 10c vorhandenen Querwand 37 durchsetzt. Die sich an den Zapfen 36 radial nach außen anschließenden Bereiche des Dichtelements 14c sind elastisch ausgestaltet und liegen aufgrund elastischer Rückstellkräfte an der in Belüftungsrichtung 13 weisenden Seite der Querwand 38 dichtend an. In dem vom Dichtelement 14c überdeckten Bereich der Querwand 38 sind mehrere Öffnungen 16' vorhanden, welche in ihrer Gesamtheit die Belüftungsöffnung 16 bilden. Wenn im Belüftungsfalle sich ein in Belüftungsrichtung 13, d.h. in Richtung Ablaufleitung 5 erstreckender Luftstrom ergibt, werden die elastischen Bereiche 35 von der Querwand 38 abgehoben, so dass Luft durch die Öffnungen 16' hindurchströmen und die Ablaufleitung 5 belüften kann.

### BEZUGSZEICHENLISTE

| | |
|---|---|
| 1 Geschirrspülmaschine | 19 Ventilsitz |
| 2 Gehäuse | 20 Querwand |
| 3 Spülbehälter | 23 Halteelement |
| 4 Boden | 24 Öffnung |
| 5 Ablaufleitung | 25 Anschlag |
| 6 Laugenpumpe | 26 Gehäuse |
| 7 Leitungsschleife | 27 Wandelement |
| 9 Belüftungskanal | 28 Flüssigkeitsfalle |
| 9'Kanalabschnitt | 29 Bereich |
| 10 Sperrventil | 30 Federelement |
| 13 Belüftungsrichtung | 31 Verbindungskanal |
| 14 Dichtelement | 33 Schraubendruckfeder |
| 15 Kraft | 34 Gehäuse |
| 16 Belüftungsöffnung | 35 elastischer Bereich |
| 16'Öffnung | 36 Zapfen |
| 17 Luftpolster | 37 Querwand |
| 18 Niveau | |

## Patentansprüche

1. Geschirrspülmaschine, insbesondere Haushalt-Geschirrspülmaschine, mit einer Laugenpumpe (6) zum Abpumpen von Spülflüssigkeit aus einem Spülbehälter (3), einer druckseitig an die Laugenpumpe (6) angeschlossenen Ablaufleitung (5), einem mit der Ablaufleitung (5) verbundenen Belüftungskanal (9), über den in Belüftungsrichtung (13') Luft in die Ablaufleitung (5) einströmen kann, und einem im Belüftungskanal (9) angeordneten, mit einem den Belüftungskanal (9) in einer Schließstellung verschließenden und in einer Öffnungsstellung freigebenden Dichtelement (14a), wobei die Geschirrspülmaschine ein in die Schließstellung rückstellendes Sperrventil (10a) umfasst, wobei das Sperrventil (10a) als Sitzventil ausgebildet ist, das das Dichtelement (14a) umfasst, wobei das Dichtelement (14a) von einer entgegen der Belüftungsrichtung (13') wirkenden Kraft (15) in der Schließstellung gehalten ist, **dadurch gekennzeichnet, dass** das Dichtelement (14a) durch sein Eigengewicht in der Schließstellung gehalten ist und wobei eine Belüftungsöffnung (16) des Sperrventils (10a) und das Dichtelement (14a) in einem Ventilraum angeordnet sind, der oberhalb der Belüftungsöffnung (16) mit dem Belüftungskanal (9) und unterhalb der Belüftungsöffnung (16) mit der Atmosphäre fluidisch verbunden ist.

2. Geschirrspülmaschine nach Anspruch 1,
**dadurch gekennzeichnet,**
**dass** zwischen dem Sperrventil (10) und dem Ablaufkanal (5) eine Flüssigkeitsfalle (28) im Belüftungskanal (9) angeordnet ist.

## Claims

1. Dishwasher, in particular household dishwasher, with a drain pump (6) for pumping washing liquid out from a wash container (3), a drain pipe (5) connected to the drain pump (6) on the pressure side, a ventilation channel (9) connected to the drain pipe (5), by way of which air can flow into the drain pipe (6) in the ventilation direction (13'), and a sealing element (14a) arranged in the ventilation channel (9), which sealing element closes the ventilation channel (9) in a closed position and releases the same in an open position, wherein the dishwasher comprises a stop valve (10a) which resets to the closed position, wherein the stop valve (10a) is embodied as a seat valve which comprises the sealing element (14a), wherein the sealing element (14a) is held in the closed position by a force (15) which acts counter to the ventilation direction (13'), **characterised in that** the sealing element (14a) is held in the closed position by means of its dead weight, and wherein a ventilation opening (16) of the stop valve (10a) and the sealing element (14a) are arranged in a valve chamber, which is fluidically connected above the ventilation opening (16) to the ventilation channel (9) and below the ventilation opening (16) to the atmosphere.

2. Dishwasher according to claim 1,
**characterised in that**
a liquid trap (28) is arranged in the ventilation channel (9) between the stop valve (10) and the outlet channel (5).

## Revendications

1. Lave-vaisselle, notamment lave-vaisselle à usage domestique, comprenant une pompe de liquide de lavage (6) destinée à pomper du liquide de lavage hors d'une cuve de lavage (3), une conduite d'évacuation (5) raccordée à la pompe de liquide de lavage (6) côté refoulement, un canal de ventilation (9) raccordé à la conduite d'évacuation (5), par l'intermédiaire duquel l'air peut entrer dans la conduite d'évacuation (5) en direction de ventilation (13'), et un élément d'étanchéité (14a) disposé dans le canal de ventilation (9), obturant le canal de ventilation (9) dans une position de fermeture et le libérant dans une position d'ouverture, dans lequel le lave-vaisselle comprend une vanne d'arrêt (10a) revenant en la position de fermeture, dans lequel la vanne d'arrêt (10a) est réalisée comme vanne de ventilation qui comprend l'élément d'étanchéité (14a), dans lequel l'élément d'étanchéité (14a) est maintenu dans la position de fermeture par une force (15) agissant à l'opposé de la direction de ventilation (13'), **caractérisé en ce que** l'élément d'étanchéité (14a) est maintenu dans la position de fermeture par son propre poids, et dans lequel une ouverture de ventilation (16) de la vanne d'arrêt (10a) et l'élément d'étanchéité (14a) sont disposées dans un espace de vanne qui est fluidiquement relié au canal de ventilation (9) au-dessus de l'ouverture de ventilation (16) et à l'atmosphère en dessous de l'ouverture de ventilation (16).

2. Lave-vaisselle selon la revendication 1,
**caractérisé en ce qu'**
entre la vanne d'arrêt (10) et le canal d'évacuation (5) est disposé un piège à liquide (28) dans le canal de ventilation (9).
